# EUROPÄISCHE PATENTSCHRIFT

(11) **EP 2 603 688 B1**
(45) Veröffentlichungstag und Bekanntmachung des Hinweises auf die Patenterteilung: **12.09.2018**
(21) Anmeldenummer: 11733843.4
(22) Anmeldetag: 18.07.2011
(51) Int. Cl.: F02M 45/08, F02M 45/10, F02M 69/04, F01N 3/20, F02M 63/00

(54) **EINSPRITZVORRICHTUNG**
INJECTION DEVICE
DISPOSITIF D'INJECTION

(30) Priorität: 09.08.2010 DE 102010039046
(43) Veröffentlichungstag der Anmeldung: 19.06.2013
(73) Patentinhaber: Robert Bosch GmbH, 70442 Stuttgart (DE)
(72) Erfinder: DOEHRING, Jochen, 70439 Stuttgart-Stammheim (DE); RIPPER, Wolfgang, 70327 Stuttgart (DE); HANNEKE, Juergen, 70499 Stuttgart (DE); NENTWIG, Godehard, 70499 Stuttgart (DE)
(86) Internationale Anmeldenummer: PCT/EP2011/062201
(87) Internationale Veröffentlichungsnummer: WO 2012/019869

(56) Entgegenhaltungen:
- EP-A2- 2 177 748
- DE-A1-102004 011 123
- DE-A1-102006 061 730
- DE-A1-102009 046 214
- NL-C- 1 037 570

## Beschreibung

### Stand der Technik

Die Erfindung betrifft eine Einspritzvorrichtung für Fluid, insbesondere eine Einspritzvorrichtung zum Einspritzen von Fluid in einen Abgasstrang eines Verbrennungsmotors.

Es ist bekannt, den Abgasen eines Verbrennungsmotors, insbesondere eines Dieselmotors, ein Fluid, wie z. B. eine wässrige Harnstofflösung, zuzuführen, um in den Abgasen vorhandene Schadstoffe, insbesondere Stickoxide, zu reduzieren. Wässrige Harnstofflösung gefriert bei niedrigen Umgebungstemperaturen und der Gefrierpunkt kann durch die Zugabe von Additiven nur in einem begrenzten Bereich abgesenkt werden, ohne die Wirksamkeit der Harnstofflösung bei der Abgasnachbehandlung negativ zu beeinflussen.

Einfrierendes Fluid dehnt sich aus und diese Volumenausdehnung kann zur Zerstörung der Komponenten des Einspritzsystems, insbesondere der Einspritzvorrichtung führen.

DE102004011123 offenbart eine Pumpe zur Förderung eines Abgasnachbehandlungsmediums. Das Pumpelement ist ein Kolben, der gegen eine Gegenkraft verschiebbar und durch eine Membran vom Medium getrennt ist.

### Offenbarung der Erfindung

Es ist eine Aufgabe der Erfindung, eine eisdruckfeste Einspritzvorrichtung bereit zu stellen, die ein stabiles hydraulisches Verhalten hat und einfach und kostengünstig aufgebaut ist.

Diese Aufgabe wird durch eine erfindungsgemäße Vorrichtung nach dem unabhängigen Patentanspruch 1 gelöst. Die abhängigen Patentansprüche beschreiben vorteilhafte Ausgestaltungen einer erfindungsgemäßen Vorrichtung.

Eine erfindungsgemäße Einspritzvorrichtung hat ein stabiles hydraulisches Verhalten und eine hohe Eisdruckfestigkeit, da die Membran durch ein elastisches Element in eine Einspritzposition gedrückt wird und eine Volumenausdehnung gefrierenden Fluids durch Komprimieren des elastischen Elements ausgleichbar ist. Der Eisdruck gefrierenden Fluids wird so zumindest teilweise von dem elastischen Element aufgenommen und eine Beschädigung von Bauteilen der Einspritzvorrichtung durch den erhöhten Eisdruck wird vermieden.

Insbesondere weist die Einspritzvorrichtung einen Druckraum auf, der zur Aufnahme eines Fluids ausgebildet und auf wenigstens einer Seite durch die flexible Membran begrenzt ist, so dass sein Volumen durch Bewegen der Membran variierbar ist, um den Druck des in dem Druckraum befindlichen Fluids zu verändern. Insbesondere kann durch Bewegen der Membran das Volumen des Druckraums reduziert und der Druck des Fluids im Druckraum erhöht werden.

Die Membran dichtet den Druckraum fluiddicht ab. Die Gefahr des Auftretens von Lecks in der Einspritzvorrichtung wird reduziert. Insbesondere weist eine erfindungsgemäße Einspritzvorrichtung keinen Kolben auf, der bewegt wird, um den Druck des Fluids zu erhöhen. Ein solcher beweglicher Kolben ist in der Regel nur mit großem Aufwand und nicht vollständig fluiddicht abdichtbar.

In einer Ausführungsform ist der Druckraum über eine Fluidleitung und ein Ein-Wege-Ventil mit Fluid befüllbar. Durch ein Ein-Wege-Ventil, welches insbesondere als Kugelventil ausgebildet sein kann, wird ein Rückfluss von Fluid aus dem Druckraum in die Fluidleitung und ein daraus resultierender Druckabfall im Druckraum verhindert.

In einer Ausführungsform umfasst der Aktuator einen Elektromagneten. Ein Elektromagnet stellt einen kostengünstigen und zuverlässigen Aktuator zur Verfügung. Alternativ kann der Aktuator als Piezo-Aktuator ausgebildet sein.

In einer Ausführungsform ist die Membran aus Metall gefertigt. Eine aus Metall gefertigte Membran ist insbesondere auch für sehr hohe Fluiddrücke und - temperaturen geeignet.

In einer Ausführungsform ist die Membran aus Kunststoff gefertigt. Eine aus Kunststoff gefertigte Membran ist besonders kostengünstig realisierbar und hat nur eine geringe Masse. Eine Kunststoffmembran kann daher mit geringem Kraftaufwand beschleunigt und mit hoher Geschwindigkeit bewegt werden, so dass sich besonders kurze Einspritzzeiten verwirklichen lassen.

In einer Ausführungsform sind an der Einspritzvorrichtung Kühlrippen zum Kühlen der Einspritzvorrichtung ausgebildet. Eine gekühlte Einspritzvorrichtung kann auch bei hohen Fluid- und/oder Umgebungstemperaturen zuverlässig betrieben werden, ohne beschädigt zu werden.

In einer Ausführungsform sind in der Einspritzvorrichtung Kühlkanäle ausgebildet, durch die eine Kühlflüssigkeit führbar ist, um die Einspritzvorrichtung zu kühlen. Unter Verwendung einer durch Kühlkanäle geführten Kühlflüssigkeit kann die Einspritzvorrichtung besonders effektiv und gleichmäßig gekühlt werden.

In einer Ausführungsform ist das elastische Element als Feder, insbesondere als Spiralfeder ausgebildet. Eine Spiralfeder stellt ein kostengünstiges und zuverlässiges elastisches Element bereit.

In einer Ausführungsform umfasst die Einspritzvorrichtung Bauteile aus einem üblichen Common-Rail-Kraftstoffinjektor. Vorzugsweise werden für den Druck erzeugenden Bereich der Einspritzvorrichtung und insbesondere für den Aktuator Bauteile eines Common-Rail-Kraftstoffinjektors verwendet. Durch die Verwendung von Bauteilen eines Common-Rail-Kraftstoffinjektors (Gleichteileprinzip) können die Entwicklungs- und Herstellungskosten der Einspritzvorrichtung reduziert werden, da auf die Neuentwicklung von Bauteilen verzichtet und auf aus der Fertigung von Common-Rail-Kraftstoffinjektoren bekannte Verfahren zurückgegriffen werden kann. Durch den Rückgriff auf felderprobte Bauteiles eines Common-Rail-Kraftstoffinjektors wird zusätzlich die Zuverlässigkeit der Einspritzvorrichtung verbessert.

Die Erfindung wird im Folgenden anhand der beigefügten Figuren näher erläutert.

Dabei zeigt:
Figur 1 eine Schnittansicht eines ersten Ausführungsbeispiels einer erfindungsgemäßen Einspritzvorrichtung;
Figur 2 eine Schnittansicht eines zweiten Ausführungsbeispiels einer erfindungsgemäßen Einspritzvorrichtung, die an einem Abgasstrang montiert ist; und
Fig. 3 ein schematisches Druckschaltbild eines Einspritzsystems mit einer erfindungsgemäßen Einspritzvorrichtung.

Angaben wie "oben" und "unten" dienen in der folgenden Figurenbeschreibung der besseren Erläuterung der in den Figuren gezeigten Ausführungsbeispiele der Erfindung, ohne die Erfindung auf die gezeigten Ausführungsbeispiele oder eine bestimmte Orientierung und/oder Einbauposition zu beschränken.

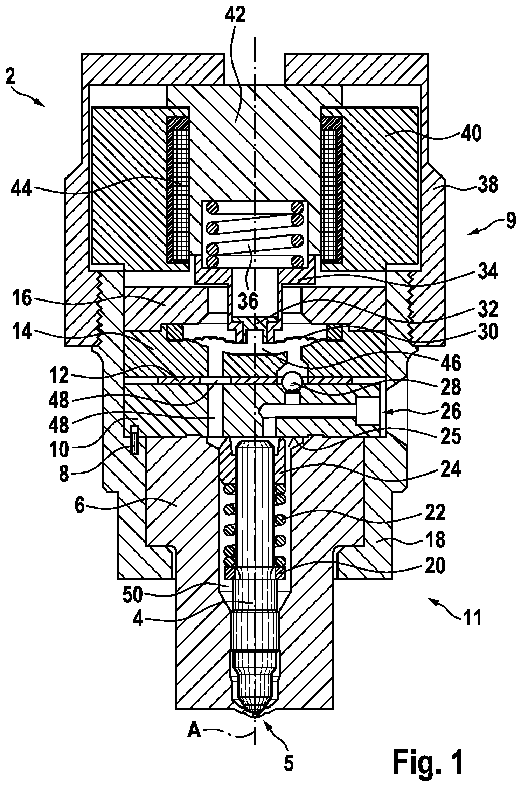

Das in der Figur 1 gezeigte Ausführungsbeispiel einer erfindungsgemäßen Einspritzvorrichtung 2 weist eine Einspritzeinheit 11 mit einem z.B. zylindrisch um eine Längsachse A ausgebildeten Düsenkörper 6 auf. In dem Düsenkörper 6 ist um die Längsachse A ein im Wesentlichen zylindrischer Einspritzraum 50 ausgebildet. An einer unteren Stirnseite des Düsenkörpers 6 ist eine Einspritzöffnung 5 ausgebildet, durch welche während des Einspritzvorgangs Fluid aus dem Einspritzraum 50 entweicht.

Entlang der Längsachse A ist im Einspritzraum 50 eine Düsennadel 4 angeordnet, die parallel zur Längsachse A zwischen einer unteren Verschlussposition, in der ein unteres Ende der Düsennadel 4 die Einspritzöffnung 5 verschließt und einer oberen geöffneten Position, in der die Düsennadel 4 die Einspritzöffnung 5 freigibt, bewegbar ist.

An ihrem in der Fig. 1 oben dargestellten Ende, welches der Einspritzöffnung 5 gegenüberliegt, ist die Düsennadel 4 in radialer Richtung von einer Steuerraumhülse 24 umgeben, wodurch oberhalb des oberen, von der Einspritzöffnung 5 abgewandten Endes der Düsennadel 4 innerhalb der Steuerraumhülse 24 ein Steuerraum 25 ausgebildet ist. Der Steuerraum 25 wird auf einer Seite von einer oberen Stirnseite der Düsennadel 4 begrenzt, so dass das Volumen des Steuerraums 25 durch Bewegen der Düsennadel 4 entlang der Längsachse A variierbar ist.

In einem entlang der Längsachse A mittleren Bereich der Düsennadel 4 ist um den Umfang der Düsennadel 4 ein Abstützring 20 ausgebildet. Eine als Spiralfeder ausgebildete Düsennadelfeder 22, welche den Umfang der Düsennadel 6 im Bereich zwischen dem Abstützring 20 und der Steuerraumhülse 24 umgibt, ist derart zwischen der Steuerraumhülse 24 und dem Abstützring 20 angeordnet, dass die Düsennadel 4 durch die Düsennadelfeder 22 elastisch an der Steuerraumhülse 24 abgestützt ist und die Düsennadelfeder 22 die Düsennadel 4 nach unten in die Verschlussposition drückt, in der sie die Einspritzöffnung 5 fluiddicht verschließt.

Oberhalb des Düsenkörpers 6 ist eine Ventilplatte 10 angeordnet, welche sowohl den Einspritzraum 50 als auch den Steuerraum 25 auf ihrer oberen, von der Einspritzöffnung 5 abgewandten Seite begrenzt. In der Ventilplatte 10 ist eine in radialer Richtung, d.h. in einem rechten Winkel zur Längsachse A, verlaufende Fluidzufuhr 26 ausgebildet, die mit einer externen, in der Figur 1 nicht gezeigten, Fluidzuleitung verbindbar ist, um der Einspritzvorrichtung 2 und insbesondere dem Steuerraum 25 im Betrieb Fluid zuzuführen.

In der Ventilplatte 10 ist ein Fluidkanal 48 ausgebildet, der den im Düsenkörper 6 ausgebildeten Einspritzraum 50 hydraulisch mit einem Druckraum 46 verbindet, der in einer Druckplatte 14 ausgebildet ist, die auf der vom Düsenkörper 6 abgewandten Seite der Ventilplatte 10 angeordnet ist.

Zwischen der Ventilplatte 10 und der Druckplatte 14 ist ein Dichtelement 12 angeordnet, welche die Schnittstelle zwischen der Ventilplatte 10 und der Druckplatte 14 fluiddicht abdichtet.

Zusätzlich ist zwischen der Ventilplatte 10 und der Druckplatte 14 ein Ein-Wege-Ventil 28, welches in dem in der Figur 1 gezeigten Ausführungsbeispiel als Kugel-Rückschlag-Ventil 28 ausgebildet ist, vorgesehen. Das Ein-Wege-Ventil 28 verbindet die Fluidzufuhr 26 derart mit einem Druckraum 46, dass ein Fluidfluss von der Fluidzufuhr 26 in den Druckraum 46 möglich ist, ein Rückfluss von Fluid aus dem Druckraum 46 in die Fluidzufuhr 26 aber verhindert wird.

Der Druckraum 46 ist Teil einer Druckeinheit 9, die oberhalb der Ventilplatte 11 innerhalb einer Schraubkappe 38 angeordnet ist. Die Schraubkappe 38 ist mit einer Düsenspannmutter 18 verschraubt, welche einen oberen Bereich des Düsenkörpers 4 umgibt und den Düsenkörper 4 gegen die Ventilplatte 10 drückt, wenn die Düsenspannmutter 18 mit der Schraubkappe 38 verschraubt ist. Durch diese Verschraubung wird die Einspritzvorrichtung 2 fluiddicht abgeschlossen und die einzelnen Bauteile der Einspritzvorrichtung 2 werden innerhalb der Düsenspannmutter 18 und der Schraubkappe 38 fixiert. Insbesondere ist die Ventilplatte 10 durch einen Fixierstift (Poka-Yoke-Stift) 8, der sich in Öffnungen, die in der Ventilplatte 10 und der Düsenspannmutter 18 ausgebildet sind, in der korrekten Orientierung zur Düsenspannmutter 18 fixiert.

Der Druckraum 46 ist auf seiner oberen, von der Ventilplatte 10 abgewandten Seite durch eine flexible Membran 30 begrenzt, die sich im Wesentlichen in einer Ebene erstreckt, die in einem rechten Winkel zur Längsachse A angeordnet ist. Das Volumen des Druckraums 46 ist durch Bewegen der flexiblen Membran 30 in einer Richtung parallel zur Längsachse A variierbar.

Ein zentraler Bereich der Membran 30 um die Längsachse A ist mittels eines Fixierelements 32, z.B. einer Fixierschraube, an einem Anker 34 befestigt. Der Anker 34 ist auf der von der Druckplatte 14 abgewandten Seite der Membran 30 angeordnet und in Richtung parallel zur Längsachse A bewegbar. Die Membran 30 ist so durch Bewegen des Ankers 34 bewegbar, um das Volumen des Druckraums 46 zu variieren.

Der Anker 34 ist über ein Ankerfederelement 36, das z.B. als um die Längsachse A angeordnete Spiralfeder ausgebildet ist, elastisch an einer Innenhülse 42 abgestützt, die auf der von der Membran 30 abgewandten Seite des Ankers 34 angeordnet ist. Die Innenhülse 42 stützt sich ihrerseits mit ihrer von dem Anker 34 abgewandten Seite an der Schraubkappe 38 ab, welche die Einspritzvorrichtung 2 an ihrem oberen Ende begrenzt.

Der Anker 34 wird in seiner Ruheposition durch die Kraft des Ankerfederelements 36 in Richtung auf die Ventilplatte 10 gedrückt und das Volumen des Druckraums 46 wird minimiert.

Um den Umfang der Innenhülse 42 sind ein Innenpol 44 und eine elektrische Spule 40 ausgebildet. Die Spule 40 ist durch in der Figur 1 nicht gezeigte elektrisehe Anschlüsse bestrombar. Durch Bestromen der Spule 40 ist ein magnetisches Feld erzeugbar, welches den Anker 34 gegen die Kraft des Ankerfederelements 36 von der Ventilplatte 10 in Richtung auf die Innenhülse 42 bewegt. Diese Bewegung bewirkt, dass sich auch der zentrale Bereich der Membran 30, der durch das Fixierelement 32 an dem Anker 34 befestigt ist, in der gleichen Richtung bewegt. Das Volumen des Druckraumes 46 wird vergrößert und im Druckraum 46 entsteht ein Unterdruck.

Der Unterdruck im Druckraum 44 und der Fluiddruck in der Fluidzufuhr 26 bewirken eine Druckdifferenz am Ein-Wege-Ventil 28, welche das Ein-Wege-Ventil 28 öffnet und Fluid strömt aus der Fluidzufuhr 26 durch das Ein-Wege-Ventil 28 in den Druckraum 46 (Ansaugvorgang). Da der Steuerraum 25 hydraulisch mit der Fluidzufuhr 26 verbunden ist, herrscht der in der Fluidzufuhr 26 vorhandene Fluiddruck auch im Steuerraum 25 und drückt die Düsennadel 4 gemeinsam mit dem Düsennadelfederelement 22 in die untere Verschlussposition, in der das untere Ende der Düsennadel 4 die Einspritzöffnung 5 im Wesentlichen fluiddicht verschließt.

Um einen Einspritzvorgang auszulösen, wird die Spule 40 stromlos geschaltet. Der Anker 34 wird nicht länger von einer durch die Spule 40 erzeugten magnetischen Kraft in einer oberen Ansaugposition gehalten, sondern durch das Ankerfederelement 36 in eine untere Einspritzposition gedrückt. Durch die Bewegung des Ankers 34 und der Membran 30 wird das Volumen des Druckraums 46 reduziert und der Fluiddruck im Druckraum 46 steigt.

Der erhöhte Druck im Druckraum 46, der höher als der Druck in der Fluidzufuhr 26 ist, bewirkt, dass das Ein-Wege-Ventil 28 schließt und verhindert, dass Fluid aus dem Druckraum 46 zurück in die Fluidzufuhr 26 strömt. Durch den in der Ventilplatte 10 ausgebildeten Fluidkanal 48 strömt Fluid aus dem Druckraum 46, das dort durch die sich in den Druckraum 46 absenkende Membran 30 verdrängt wird, in den Einspritzraum 50 und der Fluiddruck im Einspritzraum 50 steigt. Im Steuerraum 25 am oberen Ende der Düsennadel 6 liegt weiterhin der in der Fluidzufuhr 26 herrschende, geringere Druck an.

An einem gewissen Punkt überschreitet die durch den ansteigenden Druck im Einspritzraum 50 auf die Düsennadel 4 ausgeübte, aufwärts gerichtete Kraft die Summe der abwärts gerichteten Kräfte, die durch den Druck im Steuerraum 25 und das Düsennadelfederelement 22 auf die Düsennadel 4 ausgeübt werden, und die Düsennadel 4 bewegt sich in Richtung auf die Ventilplatte 10 in eine geöffnete Position, in der sie die Einspritzöffnung 5 freigibt.

Ein Teil des unter Druck stehenden Fluids im Einspritzraum 50 gelangt durch die Einspritzöffnung 5 nach außen und wird z.B. in einen in der Figur 1 nicht gezeigten Abgasstrang eingespritzt.

Durch das Entweichen von Fluid aus dem Einspritzraum 50 fällt der Druck im Einspritzraum 50 ab, bis die durch den Fluiddruck im Einspritzraum 50 auf die Düsennadel 4 ausgeübte Kraft nicht mehr in der Lage ist, die Düsennadel 4 gegen den Fluiddruck im Steuerraum 25 und die Kraft des Düsennadelfederelements 22 in einer geöffneten Position zu halten. Die Düsennadel 4 bewegt sich zurück in die Verschlussposition und verschließt die Einspritzöffnung 5. Der Einspritzvorgang ist beendet.

Durch erneutes Bestromen der Spule 40 sind der Anker 34 und die Membran 30 erneut in eine Ansaugposition bewegbar, in der Fluid durch das sich öffnende Ein-Wege-Ventil 28 in den Druckraum 46 strömt und durch erneutes Abschalten des Stromflusses durch die Spule 40 ist daraufhin ein erneuter Einspritzvorgang auslösbar.

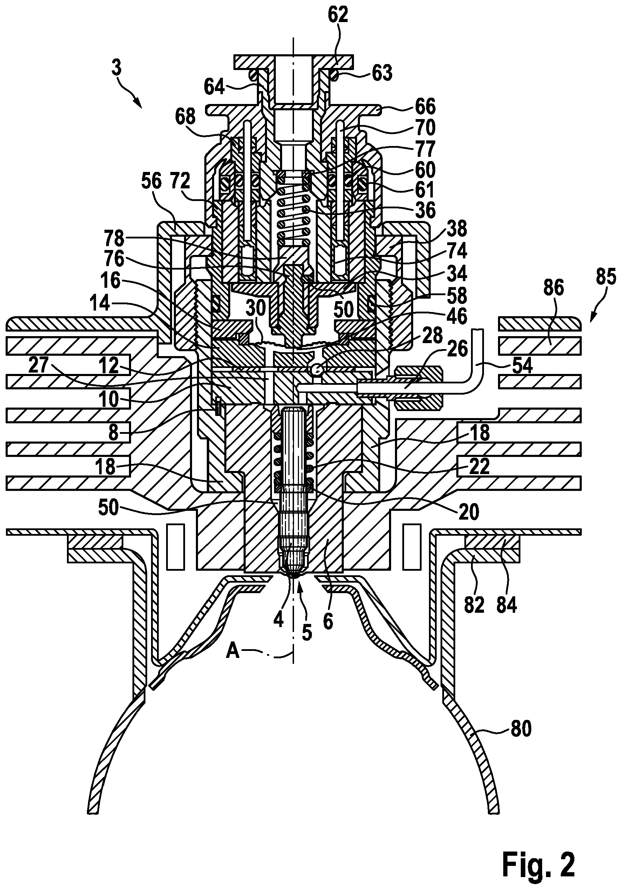

Figur 2 zeigt ein zweites Ausführungsbeispiel einer erfindungsgemäßen Einspritzvorrichtung 3, die an einem Flansch 82, der z.B. an einem Abgasstrang 80 ausgebildet ist, montiert ist.

Diejenigen Elemente der Einspritzvorrichtung 3 des zweiten Ausführungsbeispiels, die mit Elementen des ersten Ausführungsbeispiels 2 übereinstimmen, sind mit den gleichen Bezugszeichen wie in der Figur 1 bezeichnet und werden nicht erneut im Detail beschrieben.

Um den unteren Bereich der Einspritzvorrichtung 3 mit dem Düsenkörper 6, der Ventilklappe 10 und der Druckplatte 12 ist ein Kühlkörper 85 mit mehreren Kühlrippen 86 angeordnet. Der Kühlkörper 85 ist ausgebildet, um die Einspritzeinheit 11, die unmittelbar an den Abgasstrang 80, durch den im Betrieb heiße Abgase strömen, angrenzt, zu kühlen.

Der Kühlkörper 85 ist mit schwingungsdämpfenden Befestigungselementen 84 am Flansch 82 des Abgasstrangs 80 befestigt. Die Einspritzvorrichtung 3 des in der Figur 2 gezeigten zweiten Ausführungsbeispiels unterscheidet sich von der in der Figur 1 gezeigten Einspritzvorrichtung 2 im Wesentlichen dadurch, dass für die Druck erzeugende Druckeinheit 9, insbesondere im Bereich oberhalb der Membran 30 Standardbauelemente eines bekannten Common-Rail-Kraftstoffinjektors verwendet werden. Durch den Rückgriff auf solche Standardbauelemente sind die Entwicklungs- und Herstellungskosten der Einspritzvorrichtung 3 reduzierbar.

Ein zentraler Bereich der Membran 30 ist an einem Ankerbolzen 76 befestigt, der seinerseits mit einem Anker 78, wie er aus einem Common-Rail-Kraftstoffinjektors bekannt ist, verbunden ist. Oberhalb des Ankers 78 sind rund um das Ankerfederelement 36 ein Haltering 74 und Steckerfahnen 70 angeordnet.

Ein oberes, von dem Anker 78 abgewandtes Ende der Ankerfeder 36 ist über eine Einstellscheibe 77 an einer hohl ausgebildeten Hülse 64 abgestützt. Die Hülse 64 ist an einer oberen Umspritzung 66 der Einspritzvorrichtung 3 befestigt und durch einen Deckel 62 abgeschlossen.

Durch die Wahl der Dicke der Einstellscheibe 77 sind der Hub des Ankers 78 und damit auch der Hub der Membran 30 einstellbar.

Der obere Bereich der Einspritzvorrichtung 3 ist durch mehrere O-Ringe 60, die zwischen den Bauteilen angeordnet sind, fluiddicht abgedichtet.

Das Ankerfederelement 36 ist auf Seiten des Ankerbolzens 76 auf einer Abstützhülse 78 abgestützt, die mithilfe eines Halterings 50 am Ankerbolzen 76 fixiert ist. Der Deckel 62 ist durch einen Sicherungsring 63 an der Hülse 64 gesichert.

In der Figur 2 ist auch eine Fluidzuleitung 54 gezeigt, durch welche der Fluidzufuhr 26 im Betrieb Fluid zuführbar ist.

Der Kühlkörper 85 ist in der Figur 2 nur beispielhaft gezeigt. Für den Fachmann ist selbstverständlich, dass auch andere Kühlkörperformen möglich sind und ein Kühlkörper 85 auch mit einer Einspritzvorrichtung 2 gemäß dem ersten, in der Figur 1 gezeigten Ausführungsbeispiel kombinierbar ist.

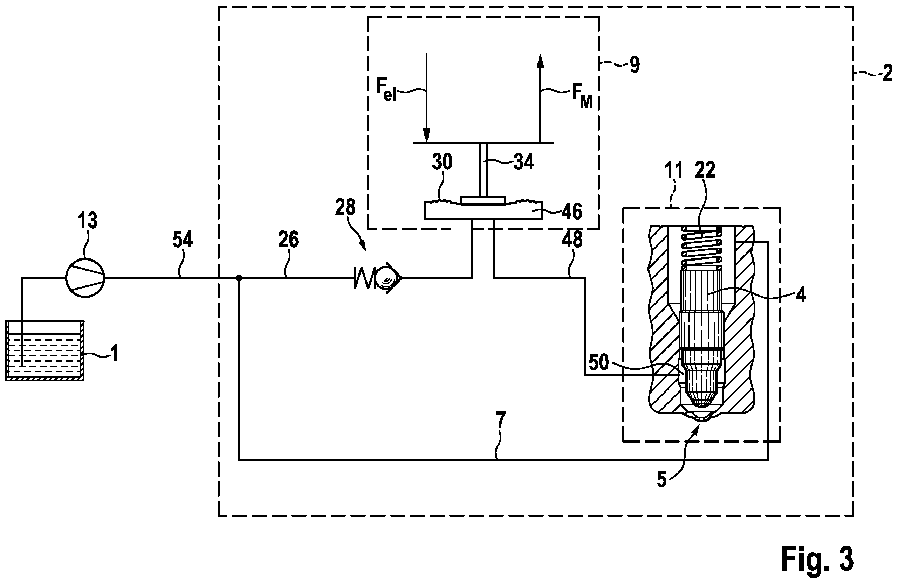

Fig. 3 zeigt ein schematisches Druckschaltbild eines Einspritzsystems mit einer erfindungsgemäßen Einspritzvorrichtung 2.

Das einzuspritzende Fluid wird im Betrieb durch eine Vorförderpumpe 13 aus einem Tank 1 gefördert und über die Fluidzuleitung 54, die Fluidzufuhr 26 und das Ein-Wege-Ventil 28 in den Druckraum 46 der Druckeinheit 9 gefördert.

Die flexible Membran 30, welche eine Seite des Druckraums 46 begrenzt, ist mit einem beweglichen Anker 34 verbunden, der durch ein in der Fig. 3 nicht gezeigtes Ankerfederelement und einen ebenfalls nicht gezeigten Elektromagneten bewegbar ist.

Insbesondere werden zum Ansaugen von Fluid der Anker 34 und mit ihm die flexible Membran 30 durch eine magnetische Kraft F_{M}, die durch Bestromen eines Elektromagneten erzeugt wird, in eine Ansaugposition gebracht, in der das Volumen des Druckraums 46 maximal ist und Fluid in den Druckraum 46 angesaugt wird.

Um einen Einspritzvorgang auszulösen, wird der Elektromagnet abgeschaltet und der Anker 34 und die Membran 30 bewegen sich durch die elastische Kraft Fₑₗ des Ankerfederelements 36 in Richtung einer unteren Einspritzposition, in der das Volumen des Druckraums 46 minimal ist.

Da das Ein-Wege-Ventil 28 einen Rückfluss von Fluid aus dem Druckraum 46 in den Zulauf 26 verhindert, strömt unter erhöhtem Druck stehendes Fluid aus dem Druckraum 46 durch den Fluidkanal 48 in den Einspritzraum 50, wo es, wie zuvor beschrieben, die Düsennadel 4 öffnet und durch die Einspritzöffnung 5 in einen (nicht gezeigten) Abgasstrang entweicht.

Fluid aus Leckströmen, die möglicherweise im Bereich der Düsennadel 4 und des Einspritzraums 5 auftreten, wird durch eine Leckageleitung 7 zurück in die Fluidzufuhr 26 geführt und steht somit für folgende Einspritzvorgänge zur Verfügung.

Erfindungsgemäß sind das Ein-Wege-Ventil 28, die Druckeinheit 9 mit dem Druckraum 46, der durch die flexible Membran 30 begrenzt wird, und die Einspritzeinheit 11 mit dem Einspritzraum 50 und der beweglichen Düsennadel 4 in einer gemeinsamen Einspritzvorrichtung 2 integriert.

Erfindungsgemäß wird eine kompakte und kostengünstig herstellbare Einspritzvorrichtung 2 bereitgestellt, welches hohe Einspritzdrücke und kurze Schaltzeiten ermöglicht und durch den Eisdruck gefrierenden Fluids nicht beschädigt wird.

Durch die erfindungsgemäße Integration der Druckeinheit 9 in die Einspritzvorrichtung 2 entfallen externe Druckleitungen, in denen das Fluid unter erhöhtem Druck steht und die aufwendig und teuer in der Herstellung und im Betrieb störanfällig sind. Leckagen des Systems, die einen erhöhten Fluidverbrauch zur Folge haben, werden reduziert.

## Patentansprüche

1. Einspritzvorrichtung (2, 3), insbesondere zum Einspritzen eines Fluids in einen Abgasstrang (80) eines Verbrennungsmotors, mit
einer flexiblen Membran (30), die mechanisch mit einem Anker (34) verbunden ist, das zwischen wenigstens einer ersten Position und wenigstens einer zweiten Position bewegbar ist,
einem elastischen Element (36), welches ausgebildet und angeordnet ist, um den Anker (34) in Richtung einer zweiten Position zu drücken; und einem Aktuator, der so ausgebildet und angeordnet ist, dass der Anker (34) durch Aktivieren des Aktuators gegen die Kraft des elastischen Elements (36) von einer zweiten Position in Richtung einer ersten Position bewegbar ist, wobei die Membran (30) einen Druckraum (46) begrenzt, der über eine Fluidleitung (26) und ein Ein-Wege-Ventil (28), welches einen Rückfluss von Fluid aus dem Druckraum (46) in die Fluidleitung (26) verhindert, mit Fluid befüllbar ist und dessen Volumen durch Bewegen der Membran (30) variierbar ist; **dadurch gekennzeichnet,**
- **dass** die Einspritzvorrichtung eine Einspritzeinheit (11) mit einem Düsenkörper (6) aufweist, wobei
- in dem Düsenkörper (6) ein mit dem Druckraum (46) verbundener Einspritzraum (50) ausgebildet ist; wobei
- an einer Stirnseite des Düsenkörpers (6) eine Einspritzöffnung (5) ausgebildet ist, durch welche während eines Einspritzvorgangs das Fluid aus dem Einspritzraum (50) entweichen kann, wobei
- in dem Einspritzraum (50) eine Düsennadel (4) angeordnet ist, welche zwischen einer Verschlussposition, in der ein Ende der Düsennadel (4) die Einspritzöffnung verschließt, und einer geöffneten Position, in der die Düsennadel (4) die Einspritzöffnung (5) freigibt, bewegbar ist, wobei
- an einer von der Einspritzöffnung (5) abgewandten Stirnseite der Düsennadel (4) ein mit der Fluidleitung (26) verbundener Steuerraum (25) ausgebildet ist, dessen Volumen durch Bewegen der Düsennadel (4) zwischen der Verschlussposition und der geöffneten Position variierbar ist; wobei
- die Düsennadel (4) durch einen Druckunterschied zwischen dem Steuerraum (25) und dem Einspritzraum (50) zwischen der Verschlussposition und der geöffneten Position bewegbar ist; und wobei
- das Ein-Wege-Ventil (28), die Druckeinheit (9) mit dem Druckraum (46) und die Einspritzeinheit (11) mit dem Einspritzraum (50) und der beweglichen Düsennadel (4) in einer gemeinsamen Einspritzvorrichtung (2) integriert sind.

2. Einspritzvorrichtung (2, 3) nach Anspruch 1, wobei der Aktuator eine elektrische Spule (40, 74) umfasst.

3. Einspritzvorrichtung (2, 3) nach Anspruch 1, wobei der Aktuator als Piezo-Aktuator ausgebildet ist.

4. Einspritzvorrichtung (2, 3) nach einem der vorangehenden Ansprüche, wobei die Membran (30) Metall enthält.

5. Einspritzvorrichtung (2, 3) nach einem der vorangehenden Ansprüche, wobei die Membran (30) Kunststoff enthält.

6. Einspritzvorrichtung (2, 3) nach einem der vorangehenden Ansprüche, wobei das elastische Element (36) als Feder, insbesondere als Spiralfeder, ausgebildet ist.

7. Einspritzvorrichtung (23) nach einem der vorangehenden Ansprüche, wobei die Einspritzvorrichtung (3) mit einem Kühlkörper ausgebildet ist.

8. Einspritzvorrichtung (3) nach einem der vorangehenden Ansprüche, wobei die Einspritzvorrichtung (3) Bauteile aus einem Common-Rail-Kraftstoffinjektor enthält.

## Claims

1. Injection device (2, 3), in particular for injecting a fluid into an exhaust tract (80) of an internal combustion engine, having
a flexible diaphragm (30) which is mechanically connected to an armature (34) which is movable between at least one first position and at least one second position,
an elastic element (36) which is designed and arranged to push the armature (34) in the direction of a second position; and
an actuator which is designed and arranged such that the armature (34) can, by activation of the actuator, be moved from a second position in the direction of a first position counter to the force of the elastic element (36), wherein the diaphragm (30) delimits a pressure chamber (46) which can be filled with fluid via a fluid line (26) and a one-way valve (28) which prevents a backflow of fluid from the pressure chamber (46) into the fluid line (26), the volume of which pressure chamber is variable by movement of the diaphragm (30); **characterized**
- **in that** the injection device has an injection unit (11) with a nozzle body (6), wherein
- an injection chamber (50) connected to the pressure chamber (46) is formed in the nozzle body (6); wherein
- on an end face of the nozzle body (6), there is formed an injection opening (5) through which, during an injection process, the fluid can escape from the injection chamber (50), wherein
- a nozzle needle (4) is arranged in the injection chamber (50), which nozzle needle is movable between a closure position, in which one end of the nozzle needle (4) closes the injection opening, and an opened position, in which the nozzle needle (4) opens up the injection opening (5), wherein
- at an end face, averted from the injection opening (5), of the nozzle needle (4), there is formed a control chamber (25) connected to the fluid line (26), the volume of which control chamber is variable by movement of the nozzle needle (4) between the closure position and the opened position; wherein
- the nozzle needle (4) is movable between the closure position and the opened position by means of a pressure difference between the control chamber (25) and the injection chamber (50); and wherein
- the one-way valve (28), the pressure unit (9) with the pressure chamber (46) and the injection unit (11) with the injection chamber (50) and the movable nozzle needle (4) are integrated in a common injection device (2) .

2. Injection device (2, 3) according to Claim 1, wherein the actuator comprises an electrical coil (40, 74) .

3. Injection device (2, 3) according to Claim 1, wherein the actuator is formed as a piezo actuator.

4. Injection device (2, 3) according to one of the preceding claims, wherein the diaphragm (30) comprises metal.

5. Injection device (2, 3) according to one of the preceding claims, wherein the diaphragm (30) comprises plastic.

6. Injection device (2, 3) according to one of the preceding claims, wherein the elastic element (36) is formed as a spring, in particular as a spiral spring.

7. Injection device (23) according to one of the preceding claims, wherein the injection device (3) is formed with a cooling body.

8. Injection device (3) according to one of the preceding claims, wherein the injection device (3) comprises components from a common-rail fuel injector.

## Revendications

1. Dispositif d'injection (2, 3), en particulier pour l'injection d'un fluide dans une ligne d'échappement (80) d'un moteur à combustion interne, comprenant
une membrane flexible (30) qui est connectée mécaniquement à un induit (34) qui peut être déplacé entre au moins une première position et au moins une deuxième position,
un élément élastique (36) qui est réalisé et disposé de manière à presser l'induit (34) dans la direction d'une deuxième position ; et
un actionneur qui est réalisé et disposé de manière à ce que l'induit (34), par activation de l'actionneur à l'encontre de la force de l'élément élastique (36), puisse être déplacé d'une deuxième position dans la direction d'une première position, la membrane (30) limitant un espace de pression (46) qui peut être rempli de fluide par le biais d'une conduite fluidique (26) et d'une soupape unidirectionnelle (28) qui empêche un reflux de fluide de l'espace de pression (46) dans la conduite fluidique (26), et dont le volume peut être varié par déplacement de la membrane (30) ; **caractérisé en ce que**
- le dispositif d'injection présente une unité d'injection (11) avec un corps de buse (6),
- dans le corps de buse (6) est réalisé un espace d'injection (50) connecté à l'espace de pression (46) ;
- une ouverture d'injection (5) étant réalisée au niveau d'un côté frontal du corps de buse (6), par le biais de laquelle le fluide peut s'échapper hors de l'espace d'injection (50) pendant une opération d'injection,
- une aiguille de buse (4) étant disposée dans l'espace d'injection (50), laquelle peut être déplacée entre une position de fermeture dans laquelle une extrémité de l'aiguille de buse (4) ferme l'ouverture d'injection, et une position ouverte dans laquelle l'aiguille de buse (4) ouvre l'ouverture d'injection (5),
- un espace de commande (25) connecté à la conduite fluidique (26) étant réalisé au niveau d'un côté frontal de l'aiguille de buse (4) opposé à l'ouverture d'injection (5), dont le volume peut être varié par déplacement de l'aiguille de buse (4) entre la position de fermeture et la position d'ouverture ;
- l'aiguille de buse (4) pouvant être déplacée par une différence de pression entre l'espace de commande (25) et l'espace d'injection (50) entre la position de fermeture et la position ouverte ; et
- la soupape unidirectionnelle (28), l'unité de pression (9) avec l'espace de pression (46) et l'unité d'injection (11) avec l'espace d'injection (50) et l'aiguille de buse déplaçable (4) étant intégrées dans un dispositif d'injection commun (2).

2. Dispositif d'injection (2, 3) selon la revendication 1, dans lequel l'actionneur comprend une bobine électrique (40, 74).

3. Dispositif d'injection (2, 3), selon la revendication 1, dans lequel l'actionneur est réalisé sous forme d'actionneur piézoélectrique.

4. Dispositif d'injection (2, 3) selon l'une quelconque des revendications précédentes, dans lequel la membrane (30) contient du métal.

5. Dispositif d'injection (2, 3) selon l'une quelconque des revendications précédentes, dans lequel la membrane (30) contient du plastique.

6. Dispositif d'injection (2, 3) selon l'une quelconque des revendications précédentes, dans lequel l'élément élastique (36) est réalisé sous forme de ressort, en particulier sous forme de ressort spiral.

7. Dispositif d'injection (23) selon l'une quelconque des revendications précédentes, dans lequel le dispositif d'injection (3) est réalisé avec un corps de refroidissement.

8. Dispositif d'injection (3) selon l'une quelconque des revendications précédentes, dans lequel le dispositif d'injection (3) contient des composants d'un injecteur de carburant à rampe commune.
